# EUROPÄISCHE PATENTSCHRIFT

(11) **EP 4 025 885 B1**
(45) Veröffentlichungstag und Bekanntmachung des Hinweises auf die Patenterteilung: **26.02.2025**
(21) Anmeldenummer: 20740276.9
(22) Anmeldetag: 09.07.2020
(51) Int. Cl.: G01J 3/18, G02B 6/02, G01D 5/353, G01J 1/02, G01J 3/02, G01J 9/00, G02B 6/42

(54) **VORRICHTUNG FÜR OPTISCHE ANWENDUNGEN**
DEVICE FOR OPTICAL APPLICATIONS
DISPOSITIF POUR APPLICATIONS OPTIQUES

(30) Priorität: 02.09.2019 DE 102019123468
(43) Veröffentlichungstag der Anmeldung: 13.07.2022
(73) Patentinhaber: FISENS GMBH, 38126 Braunschweig (DE)
(72) Erfinder: WALTERMANN, Christian, 38640 Goslar (DE); GÜHLKE, Philip Erik, 10781 Berlin (DE); KOCH, Jan, 38640 Goslar (DE); SCHIPPERS, Wolfgang, 38104 Braunschweig (DE)
(74) Vertreter: Einsel, Martin
(86) Internationale Anmeldenummer: PCT/EP2020/069438
(87) Internationale Veröffentlichungsnummer: WO 2021/043470

(56) Entgegenhaltungen:
- EP-A2- 0 840 150
- WO-A1-2018/153868
- DE-A1- 102016 214 887
- US-A1- 2004 056 183
- US-B1- 10 337 918

## Beschreibung

Die Erfindung betrifft eine Vorrichtung für optische Anwendungen, mit einem Lichtwellenleiter, an dem eine Lichtquelle anschließbar ist, wobei der Lichtwellenleiter so aufgebaut ist, dass von der anschließbaren Lichtquelle abgegebenes Licht sich längs einer Lichtfortpflanzungsachse ausbreitet, mit einer wellenlängensensitiven Gitterstruktur im Lichtwellenleiter, und mit Detektoren, die so angeordnet sind, dass sie Teilmengen des von der wellenlängensensitiven Gitterstruktur gestreuten Lichts der Lichtquelle aufnehmen.

Vorrichtungen für optische Anwendungen mit einem Lichtwellenleiter sind vielfach bekannt. In dem Lichtwellenleiter wird das Licht geführt und breitet sich darin in eine Fortpflanzungsrichtung aus, das eine Lichtquelle einspeist.

Bereits in der DE 42 09 672 C1 wird eine Einrichtung zur Bestimmung der Wellenlänge optischer Strahlung beschrieben, die mit einem Lichtwellenleiter mit einer wellenlängenselektiven Gitterstruktur arbeitet. An den Gitterstrukturen wird Strahlung ausgekoppelt und fällt auf zugeordnete Detektoren, die Teil eines Spektrometers sind. Eine ähnliche Konstruktion zeigt auch die US 5,982,962 A.

Aus der US 6,885,792 B2 ist ein System zum Überwachen von Lichtwellenlängen in optischen Fasern bekannt. Dabei fällt das an den Gitterstrukturen ausgekoppelte Licht auf Detektoren.

Ein weiteres System zum Überwachen von Lichtwellenlängen in einem Lichtwellenleiter mit Gitterstrukturen wird in der US 2007/0110367 A1 beschrieben.

Interessant sind zunehmend Anwendungen, bei denen es darum geht, Licht der Lichtquelle näher zu betrachten, welches eine bestimmte interessierende Wellenlänge besitzt, jedoch bestimmten Beeinflussungen unterzogen wurde. In solchen Fällen sollen etwa Intensitätsminima oder Intensitätsmaxima näher betrachtet werden und es interessieren die spektralen Eigenschaften des entsprechenden Lichts im Bereich dieser Wellenlänge.

Bekannt ist beispielsweise aus der DE 10 2017 119 810 B4 ein Vorschlag, bei dem derartiges Licht über eine Lichteintrittsöffnung einem optoelektrischen Chip zugeführt wird. In diesem Chip ist ein Transmissionsfilter schräg zur Lichtfortpflanzungsachse angeordnet. Das Filter reflektiert eine Teilmenge des auftreffenden Lichts auf einen ersten Detektor und lässt eine weitere Teilmenge passieren und auf einen zweiten Detektor fallen. Die Messwerte der beiden Detektoren können dann in Bezug zueinander gesetzt werden und erlauben Schlussfolgerungen.

Mit dieser dort beschriebenen Konstruktion soll der bisher bei derartigen Vorrichtungen übliche Einsatz von separaten Strahlteilern entfallen können, da die Filter diese Aufgabe dieser Teilung der Strahlen in zwei Teilungen gleich mit übernehmen. Trotz der Vorzüge einer derartigen Konzeption wird also mit einer recht deutlichen Strahlteilung und relativ großen Bauelementen gearbeitet und es stellt sich die Frage, ob nicht alternative Lösungen ebenfalls Vorteile besitzen können.

Andere Vorschläge zur Auswertung von Lichtwellenlängen bei optischen Anwendungen sind anfällig für thermische Störungen und liefern abhängig von den Umgebungsbedingungen schwankende Ergebnisse. Einige generelle Probleme sind auch die Geschwindigkeit der Auswertung, häufig komplexe optische Strukturen und zu große Bauelemente.

Zu anderen Anwendungszwecken sind Vorrichtungen für optische Anwendungen mit Lichtwellenleitern bekannt, die mit sogenannten Faser-Bragg-Gittern arbeiten, wie sie beispielsweise aus der WO 1998/44366 A1 grundsätzlich bekannt sind und auch in der WO 2018/153868 A1 beschrieben werden. Dort wird auch eine spezielle Form für Gitterstrukturen mit einer Vielzahl von ellipsoidischen Einzelstrukturen in Lichtwellenleitern beschrieben.

Weiteren Stand der Technik bildet die US 2004/0561 83 A1, welche sich unter anderem mit Filtern beschäftigt.

Aufgabe der Erfindung ist es dem gegenüber, eine gattungsgemäße Vorrichtung für optische Anwendungen mit einem Lichtwellenleiter vorzuschlagen, die einen möglichst einfachen Aufbau besitzt, der weniger anfällig für thermische Störungen ist und eine hochfrequente Auswertung von Wellenlängen ermöglicht.

Diese Aufgabe wird mittels der Erfindung bei einer gattungsgemäßen Vorrichtung dadurch gelöst, dass die Gitterstruktur im Lichtwellenleiter aus periodisch angeordneten ellipsoiden Strukturelementen aufgebaut ist, wobei die ellipsoiden Strukturelemente einen anderen Brechungsindex als das sie umgebende Material des Lichtwellenleiters besitzen, wobei die ellipsoiden Strukturelemente eine Längsachse und eine kurze Achse aufweisen, die im Wesentlichen senkrecht zur Lichtfortpflanzungsachse stehen, so dass abhängig von der Wellenlänge Teilmengen des von der Gitterstruktur gestreuten Lichts aus dem Lichtwellenleiter ausgekoppelt werden und auf die Detektoren fallen, dass zwischen mindestens einem der Detektoren und dem Lichtwellenleiter ein absorbierender oder teilreflektierender Filter angeordnet ist, dass die Detektoren Messelemente für die Intensität der auf den jeweiligen Detektor auftreffenden Teilmenge des Lichts aufweisen, dass ein Auswertungselement vorgesehen ist, das aus dem Intensitätsverhältnis der mehreren Detektoren eine Wellenlänge bestimmt, und dass die Detektoren so angeordnet sind, dass sie einander gegenüber auf verschiedenen Seiten der langen Achsen der ellipsoiden Strukturelemente in der Gitterstruktur angeordnet sind, oder auf nur einer Seite der langen Achse der ellipsoiden Strukturelemente der Gitterstruktur angeordnet sind, wobei sie jeweils so positioniert sind, dass sie eine unterschiedliche gestreute Beugungsordnung der betrachteten Wellenlänge erfassen, oder zwei Gruppen von Detektoren vorgesehen sind, von denen eine Gruppe aus mindestens zwei Detektoren besteht, die einander gegenüber auf verschiedenen Seiten der langen Achsen der ellipsoiden Strukturelemente in der Gitterstruktur angeordnet sind, und die andere Gruppe von Detektoren aus mindestens zwei Detektoren besteht, die auf nur einer Seite der langen Achse der ellipsoiden Strukturelemente der Gitterstruktur angeordnet sind, wobei sie jeweils so positioniert sind, dass sie eine unterschiedliche gestreute Beugungsordnung der betrachteten Wellenlänge erfassen.

Mit der Erfindung wird von dem Konzept aus der DE 10 2017 119 810 B4 vollständig abgegangen. Statt großformatige Transmissionsfilter und Detektoren innerhalb eines Gehäuses aufzubauen und anzuordnen und das zu untersuchende Licht insgesamt über eine Strahlteilung mittels eines Transmissionsfilters und einer Teiltransmission zu Detektoren zu führen, wird stattdessen ein vollkommen neuer Weg beschritten und das zu untersuchende Licht der Lichtquelle mittels einer Gitterstruktur aus dem Lichtwellenleiter herausgestreut und das durch eine bestimmte Gitterstruktur sich ergebende Streumuster für die angestrebte Führung der Teilmengen des Lichts in Richtung der Detektoren genutzt.

Die Veränderungen einer Lichtwellenlänge in einem Lichtwellenleiter kann auf diese Weise schnell, robust und reproduzierbar bestimmt werden. Der gesamte Aufbau ist sehr klein und benötigt keine komplexen optischen Strukturen, sondern lediglich eine Modifikation des Lichtwellenleiters selbst und einige neben dem Lichtwellenleiter bzw. auf diesem als zusätzliche Schichten aufgebrachte Elemente. Das bedeutet auch, dass die Gesamtkonstruktion für thermische Störungen wenig anfällig ist, denn die sehr kurzen Wege und Abstände führen dazu, dass es praktisch keine thermischen Unterschiede zwischen den Positionen in der Vorrichtung gibt.

Gebrauch gemacht wird dabei von bestimmen technischen Effekten. Eine stark fokussierte Femtosekundenlaserstrahlung kann mikroskopische Strukturen in Lichtwellenleitern wie beispielsweise Glasfasern, verschiedenen Polymeren oder auch planaren Schichten bestehend aus planaren Materialien erzeugen, welche intern geführtes Licht streuen. Die typischerweise stark elliptische Form des Laserfokus bei einer solchen Femtosekundenlaserstrahlung führt zu einer deutlich bevorzugten Streuung in Richtung der langen Achse der auf diese Weise erzeugten ellipsoidischen Struktur.

Wenn nun eine Vielzahl von derartigen Strukturen eines Gesamtaufbaus außerdem eine Periodizität aufweisen, interferieren die einzelnen gestreuten Anteile miteinander. Das in dem Lichtwellenleiter sich fortpflanzende Licht einer bestimmten Wellenlänge wird dann durch diese Vielzahl von ellipsoidischen Strukturen nahezu ausschließlich in bestimmten Raumwinkeln gestreut. Diese Raumwinkel entsprechen konstruktiven Interferenzen der Bragg-Bedingung in verschiedenen Ordnungen.

Je nach dem periodischen Aufbau eines aus den einzelnen Elementen zusammengesetzten Gitters können die Richtungen der entstehenden ausgekoppelten Strahlungen für eine bestimmte Wellenlänge verändert werden. Bei einer Periode von genau der halben Wellenlänge wird lediglich Licht direkt innerhalb der Faser des Lichtwellenleiters reflektiert, also um genau 180 ° gebeugt. Dieser Spezialfall entspricht einem üblichen Faser-Bragg-Gitter. Eine Gitterstruktur mit einem Abstand genau entsprechend der Wellenlänge erzeugt zusätzlich genau einen senkrecht zur Faser des Lichtwellenleiters austretenden Strahl. Betrachtet man eine Gitterstruktur mit periodischen Abständen von einem 1,5-fachen der Wellenlänge des fortgepflanzten Lichtes, so entsteht ein zweiter Strahl. Betrachtet man nun den doppelten Abstand der Einzelelemente einer Gitterstruktur, so entsteht ein dritter Strahl, und so fort.

Mit vergleichsweise einfachen Modifikationen in der Periode kann außerdem der Strahl selbst fokussiert oder defokussiert werden. Eine nähere Betrachtung einer derartigen Gitterstruktur und der Modifikationen, wenn auch zu einem anderen Zweck, ist in der WO 2018/153868 A1 angegeben.

Alle erwähnten Strahlen und auch die beiden bevorzugten Auskoppelrichtungen für die fortgepflanzten Teilmengen des Lichts werden durch dieselbe Gitterstruktur erzeugt. Das bedeutet, dass die Richtungen zueinander definiert korrelieren und insbesondere auch das Verhältnis der Intensitäten der Teilmengen auf allen Strahlen zueinander konstant ist.

Erfindungsgemäß sind nun zwei Detektoren vorgesehen, auf die das ausgekoppelte Licht auftreffen soll. Bei zwei alternativ zueinander anwendbaren Anordnungen tritt nun der erfindungsgemäße Effekt auf.

Im ersten Fall benötigt man zwei unterschiedliche Strahlen. Im anderen Fall verwendet man die beiden bevorzugten Auskoppelrichtungen einer bestimmten Streuordnung der Gitterstruktur. In beiden Fällen findet die Messung der Detektoren unabhängig von Temperatureinflüssen, Verlusten oder auch mechanischen Verspannungen im Wellenleiter statt, da die Temperatureinflüsse auf beide Teilstrahlen gleichermaßen wirken und auch Verluste oder mechanische Verspannungen im Lichtwellenleiter entweder gar nicht auftreten können oder jedenfalls beide Teilmengen gleichermaßen treffen.

Gleiches gilt für unterschiedliche Polarisationszustände, die im Lichtwellenleiter auftreten können.

Es bildet sich also ein konstantes Intensitätsverhältnis der Strahlen bzw. Teilmengen des fortgepflanzten Lichts.

Mittels der Erfindung wird es also möglich, Lichtwellenlängen bzw. Lichtwellenlängenänderungen des im Faserkern des Lichtwellenleiters geführten und sich fortpflanzenden Lichtes zu bestimmen. Dieses Licht wird an der Gitterstruktur gestreut. Zusätzlich wird mindestens ein wellenlängenselektiver Lichtfilter in den einen Strahlengang zwischen der Gitterstruktur und einem der Detektoren eingebracht. Durch Ausnutzung des konstanten Intensitätsverhältnisses der Teilmengen des fortgepflanzten Lichts bzw. der Strahlen wird eine wellenlängenabhängige Intensitätsänderung im Verhältnis der beiden Detektoren gemessen.

Verändert sich nun die zu untersuchende Lichtwellenlänge, dann ändert sich auch das Verhältnis der Signale zwischen den beiden Detektoren. Das liegt daran, dass das passend ausgewählte Filter im Strahlengang entweder mehr oder weniger Licht transmittiert, so dass mehr oder weniger Licht auf den Detektor fällt. Das entsprechende Verhältnis kann bei Kenntnis der spektralen Eigenschaften des ausgewählten Filters in eine Änderung der Lichtwellenlänge zurückgerechnet werden.

Besonders vorteilhaft an der erfindungsgemäßen Lösung ist eine extreme Miniaturisierbarkeit. Die Gitterstruktur, die hierfür benötigt wird, muss nur wenige 100 der oben genannten ellipsoidische Strukturelemente aufwenden. Das hat zur Folge, dass die beiden Lichtstrahlen bzw. Teilmengen des fortgepflanzten Lichts bereits auf kleinstem Bauraum voneinander getrennt werden können. Es wird auf diese Weise denkbar, eine Gesamtbaugröße für eine Analyse einer Lichtwellenlänge von nur wenigen Millimetern zu erreichen.

Weitere Vorteile und bevorzugte Merkmale sind in den Unteransprüchen und in der folgenden Figurenbeschreibung angegeben.

In der Zeichnung sind verschiedene Ausführungsformen einer erfindungsgemäßen Vorrichtung näher dargestellt.

Es zeigen:
- **Figur 1**: Eine schematische Darstellung einer ersten Ausführungsform der Erfindung;
- **Figur 2**: eine schematische Darstellung der zweiten Ausführungsform der Erfindung;
- **Figur 3**: eine dritte Ausführungsform der Erfindung;
- **Figur 4**: eine vierte Ausführungsform der Erfindung;
- **Figur 5**: eine fünfte Ausführungsform der Erfindung;
- **Figur 6**: eine sechste Ausführungsform der Erfindung; und
- **Figur 7**: eine siebente Ausführungsform der Erfindung

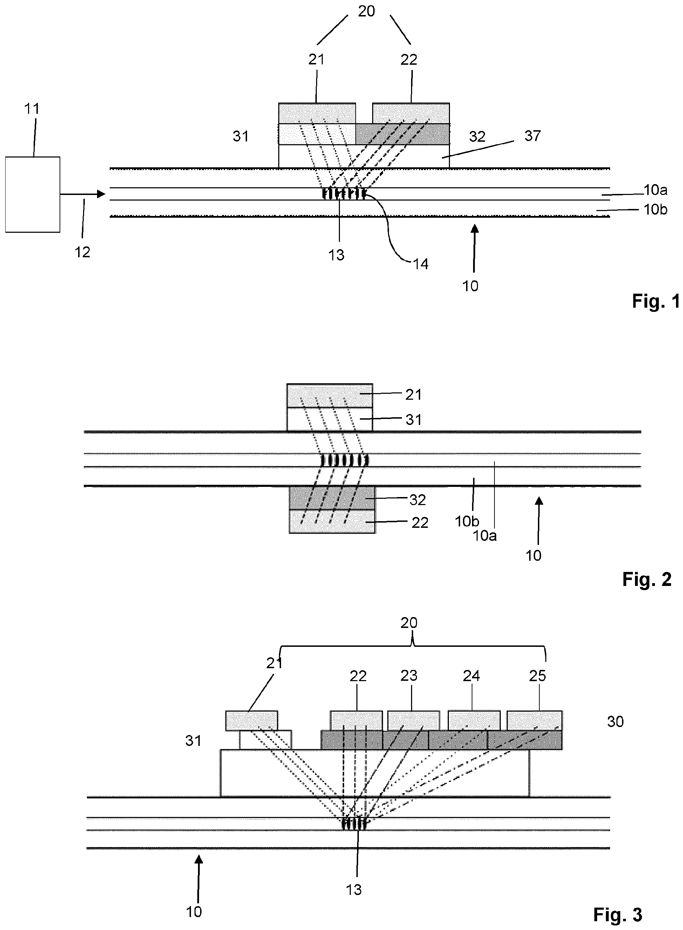

In der **Figur 1** ist eine grundsätzliche schematische Darstellung einer vereinfachten Ausführungsform der Erfindung gezeigt. Man sieht dabei einen Lichtwellenleiter 10 horizontal in der Bildebene verlaufen.

Schematisch kann man sich am Ende des Lichtwellenleiters 10 eine anschließbare Lichtquelle 11 vorstellen, die hier nur angedeutet ist.

Von der Lichtquelle 11 wird Licht in den Lichtwellenleiter 10 abgegeben und pflanzt sich dann längs einer Lichtfortpflanzungsachse 12 in dem Lichtwellenleiter 10 fort.

Wie man weiter erkennt, ist ein zentrales Element für die Ausführungsform der Erfindung eine Gitterstruktur 13.

Die Gitterstruktur 13 ist in dem inneren Teil des Lichtwellenleiters 10 angeordnet, also in einem Faserkern 10a. Der Faserkern 10a wird umgeben von einem Mantel 10b.

Die Gitterstruktur 13 besteht aus einer Vielzahl von kleinen ellipsoidischen Strukturelementen 14. Diese sind hier nur angedeutet. Sowohl die Längsachse als auch eine kurze Achse der ellipsoidischen Strukturen 14 stehen senkreicht zur Lichtfortpflanzungsachse 12 innerhalb des Lichtwellenleiters 10.

Weiter ist schematisch dargestellt, dass zumindest zwei Detektoren einer insgesamt mit dem Bezugszeichen 20 versehenen Gruppe von Detektoren vorgesehen sind. Die Detektoren 20 befinden sich außerhalb des Lichtwellenleiters 10 und auch außerhalb des Mantels 10b des Lichtwellenleiters 10.

Zwischen den beiden Detektoren 20 und dem Lichtwellenleiter 10 befindet sich jeweils ein Filter einer Gruppe 30 von Filtern. Zwischen einem ersten Detektor 21 und dem Mantel 10b des Lichtwellenleiters 10 befindet sich mindestens ein erstes Filter 31. Zwischen einem zweiten Detektor 22 und der Außenseite des Mantels 10b des Lichtwellenleiters 10 befindet sich ein mögliches zweites Filter 32. Die von der Gitterstruktur 13 gestreuten und gebrochenen Teilmengen des sich fortpflanzenden Lichtes werden aus dem Kern 10a des Lichtwellenleiters 10 durch den Mantel 10b und ein an dem jeweiligen Ort befindliches Filter 31 oder 32 zu den außerhalb des Filters angeordneten Detektoren 21 oder 22 geführt.

Die Teilmengen des gestreuten Lichts stellen für sich betrachtet definierte Strahlen dar und breiten sich räumlich voneinander getrennt aus, so dass auf jeden Detektor 20 immer nur eine gestreute Teilmenge auftrifft. Die gestreuten Teilmengen sind in der schematischen Darstellung als unterschiedlich gestrichelte Linien dargestellt.

Der schematischen Darstellung kann man noch entnehmen, dass außerdem zwischen den Filtern 31 und 32 und dem Lichtwellenleiter 10 ein Befestigungselement oder Platzhalter 37 angeordnet werden können, die für beide Detektoren 21 und 22 identisch sein können.

Die Detektoren werden also aufgrund mindestens eines der oder beider Filter 31 und 32 und unterschiedlichen Teilmengen des Lichts beaufschlagt und können daraus entsprechende Schlussfolgerungen über die Wellenlänge des sich fortpflanzenden Lichtes in dem Lichtwellenleiter 10 ziehen.

Der Abstand der einzelnen ellipsoiden Strukturelemente 14 der Gitterstruktur 13 sollte mehr als 120 % der betrachteten Wellenlänge betragen. Diese Angabe ist auf den Brechungsindex im Lichtwellenleiter 10 bezogen. Dadurch kann sichergestellt werden, dass zwei Ordnungen des sich fortpflanzenden Lichtes aus der Gitterstruktur 13 ausgekoppelt werden.

Darüber hinaus sollte der Abstand zwischen dem Lichtwellenleiter 10 und den Detektoren 20 so groß gewählt werden, dass die einzelnen Strahlen der beiden Auskoppelordnungen, die verwendet werden, sich auch vollständig räumlich trennen. Typischerweise sollte man hierzu einen Abstand wählen, der so groß ist, wie die gesamte Gitterstruktur 13 innerhalb des Kerns 10a des Lichtwellenleiters 10.

Um dieses Ziel zu erreichen, bietet es sich an, den oben erwähnten Platzhalter 37 zu definieren und entsprechend zu wählen.

In der **Figur 2** ist eine schematische Darstellung einer alternativen Anordnung mit einer anderen Ausführungsform der Erfindung zu erkennen. Grundsätzlich sind die verwendeten Elemente allerdings die gleichen.

Man sieht wiederum einen Lichtwellenleiter 10 mit einem Kern 10a und einem Mantel 10b. Im inneren des Kerns 10a befindet sich wiederum eine Gitterstruktur 13 mit ellipsoidischen Strukturelementen 14, wobei zu besseren Übersicht diese beiden Bezugszeichen in der Figur 2 weggelassen sind.

Außen um den Mantel 10b des Lichtwellenleiters 10 herum ist wiederum eine Schicht mit Filtern 31 und 32 vorgesehen und außerhalb von Filtern 31 und 32 der Filtergruppe 30 sind Detektoren 21 und 22 der gesamten Detektorgruppe 20 angebracht.

In der Ausführungsform der Figur 2 erfassen zwei einander gegenüber liegende Detektoren 21 und 22 das auftreffende Licht. Sie vergleichen das aus dem Lichtwellenleiter 10 mittels der Gitterstruktur 13 ausgekoppelte Licht durch unterschiedliche Filter 31 und 32.

Neben diesen grundsätzlichen schematischen Anordnungen sind auch kompliziertere und somit leistungsfähigere Ausführungsformen möglich, die von den Erfindungsgedanken Gebrauch machen.

Eine solche Ausführungsform ist etwa in der **Figur 3** zu erkennen. Sie stellt eine Art Mehrkanalsystem mit mehreren gestreuten Beugungsordnungen dar.

Denkbar ist es, mittels der Gitterstruktur 13 nicht nur zwei Ordnungen zu erzeugen, sondern drei oder mehr Ordnungen. Diese verschiedenen Ordnungen können dann auf nicht nur zwei, sondern auf mehr Detektoren der Detektorgruppe 20 abgebildet werden. Als Detektoren bietet es sich an, Fotodioden zu verwenden, insbesondere ein Array aus mehreren Fotoioden. Als Detektoren 20 können aber genauso gut Pixel eines Bildsensors dienen, wenn diese Pixel groß genug sind, um jeweils nur eine gestreute Teilmenge des Licht zu empfangen.

Durch den Einsatz eines oder verschiedener Filter 30 lassen sich mit der Detektorengruppe 20 auch mehrere verschiedene Wellenlängen des sich fortpflanzenden Lichts im Lichtwellenleiter 10 auswerten.

Wenn mehrere Ordnungen erzeugt und auf verschiedene Detektoren 20 abgebildet werden, können außerdem zusätzliche verschiedenartige Filter 30 eingesetzt werden, beispielsweise Polarisationsfilter. Dadurch kann neben der interessierenden Wellenlänge und ihrer Veränderung zusätzlich auch eine Veränderung der Polarisation bestimmt werden.

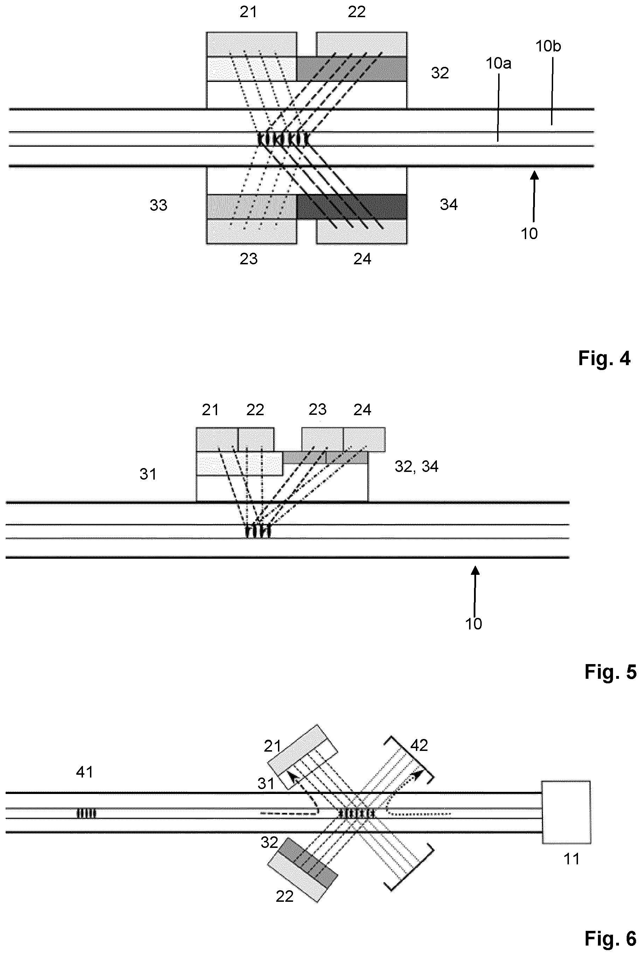

In der **Figur 4** ist eine Weiterentwicklung dieser Idee dargestellt. Man sieht hier in einer beispielhaften Ausführungsform, dass die Änderung der Wellenlänge des sich fortpflanzenden Lichts in dem Lichtwellenleiter 10 mittels der ersten ausgekoppelten Ordnung und dem Intensitätsverhältnis zwischen den Messwerten der Detektoren 21 und 23 ermittelt wird, wobei ein wellenlängenselektives Filter 33 vor den Detektor 23 positioniert worden ist.

Außerdem kann dann mit Hilfe einer zweiten ausgekoppelten Ordnung und dem Intensitätsverhältnis der Detektoren 22 und 24 eine Polarisationsänderung in Abhängigkeit der Änderung der Wellenlänge gemessen werden. Dazu wird eine Positionierung von zwei linear senkrecht zueinander gerichteten Polarisationsfiltern 32 und 34 vorgenommen.

In der **Figur 5** wird ein Mehrkanalsystem mit Wellenlängenbereichen und mehreren Detektoren 20 beschrieben. Das Bezugszeichen der Detektorgruppe 20 ist der Übersichtlichkeit halber wegelassen.

Bei dieser Ausführungsform hängen die weiteren gestreuten Teilmengen und deren Auskoppelwinkel insbesondere von den Wellenlängenbereichen ab. Beispielsweise kann Licht des Wellenlängenbereichs 820-825 mm und Licht des Wellenlängenbereichs 830nm-835nm so an der Gitterstruktur 13 gestreut werden, als dass sie als definierte Strahlen getrennt voneinander durch unterschiedliche Detektoren 20 gemessen werden können. Dabei kann in einer Ausführungsform vorgesehen werden, mehrere Detektoren 20 jeweils nebeneinander anzuordnen und dabei leicht zueinander zu versetzen. Die Anordnung erfolgt dabei so, dass die Detektoren lediglich die Auskopplung von einem bestimmten Wellenlängenbereich empfangen. Jedes Paar von Detektoren fungiert so als eigener Messkanal und kann parallel genutzt werden. Dabei dient einer der beiden Detektoren eines Paares als Referenz, der andere Detektor des Paares als auszuwertendes Signal.

In einer weiteren, besonders bevorzugten Ausführungsform der **Figur 6** wird die Gitterperiode der Gitterstruktur 13 (das Bezugszeichen ist nicht eingetragen) derart gewählt, dass ein Licht, welches in entgegengesetzte Richtungen durch den Lichtwellenleiter 10 propagiert, für die betrachtete Wellenlänge für alle Ordnungen in unterschiedliche Richtung propagiert und diese so voneinander unterschieden werden können.

Das ist möglich für die Gitterpunktabstände in der Gitterstruktur 13 von 50 bis 90 % der betrachteten Wellenlänge sowie auch von 110 bis 140 % und von 170 bis 180 %, bezogen auf den Brechungsindex im Lichtstellenleiter 10.

Dabei kann an dem einen Ende des Lichtwellenleiters 10 direkt Licht aus der Lichtquelle 11 eingekoppelt werden und das zunächst streuende Licht über eine Strahlfalle 42 vernichtet werden. Lediglich ein zunächst transmittierter Anteil des Lichts wird im weiteren Verlauf des Lichtwellenleiters 10 zum Beispiel an einem Faser-Bragg-Gitter 41 reflektiert. Die Detektoren 21, 22 werden derart ausgerichtet, dass sie konstruktive Streurichtungen des reflektierenden Signals auffangen können. Diese Ausführungsform stellt ein stark vereinfachtes und vorteilhaftes Sensorsystem mit einem zusätzlichen Faser-Bragg-Gitter 41 dar. Ein solches System kann auch als FBG-Sensorsystem bezeichnet werden.

Ein vereinfachtes Sensorsystem bestehend aus einer Lichtquelle 11 und einem Faser-Bragg-Gitter 41 an den Enden des Lichtwellenleiters 10 sowie mit einer Gitterstruktur 13, einem Fotodiodenpaar als Detektoren 20 und mit Filtern 30 sowie einer Streulichtfalle 42 ist in der Figur 6 zu erkennen. Dabei wird die räumliche Asymmetrie des gestreuten Lichts je nach der Lichtpropagationsrichtung ausgenutzt.

Zusätzlich ist die Beleuchtung der Gitterstruktur 13 von dem einen Ende des Lichtwellenleiters 10 mit der Lichtquelle 11 und die Positionierung von einem oder mehreren Faser-Bragg-Gittern 41 entlang des Lichtwellenleiters 10 an dem anderen Ende besonders vorteilhaft.

Als Lichtquelle 11 können LEDs, SLEDs, MikroLEDs oder durchstimmbare Laser oder auch andere Lichtquellen eingesetzt werden.

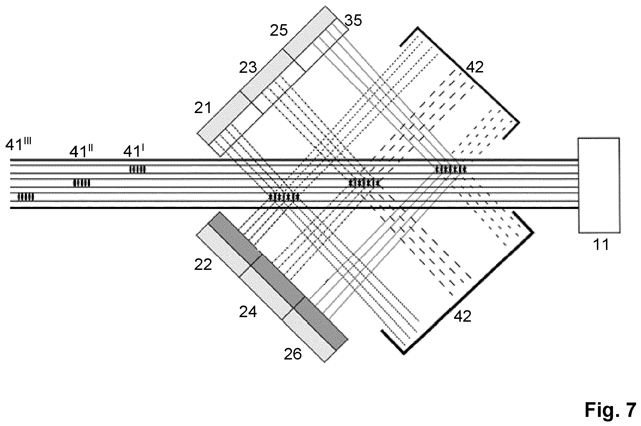

In der **Figur 7** ist eine Mehrkanalauswertung dargestellt, bei der als Lichtwellenleiter 10 sogenannte Mehrkernfasern eingesetzt werden.

In einer Mehrkernfaser als Lichtwellenleiter 10 können mehrere Kanäle parallel ausgewertet werden. Dazu wird für jeden Kern 10a des Lichtwellenleiters 10 eine eigene Gitterstruktur 13 eingeschrieben. Außerdem werden jeweils mindestens zwei Detektoren 20 und mindestens ein Filter 30 platziert.

In einer vorteilhaften Ausführungsform ist eine solche Mehrkanalauswertung zur Messung von mindestens einem Faser-Bragg-Gitter 41 pro Kern 10a des Lichtwellenleiters 10 bi-direktional wie in der Ausführungsform aus Figur 6 ausgestaltet. Licht, welches von der Lichtquelle 11 aus propagiert und durch die jeweiligen ellipsoiden Strukturelemente 14 der Gitterstrukturen 13 der mehreren Kerne 10a des Lichtwellenleiters 10 ausgekoppelt werden, wird in Streulichtfallen 42 vernichtet.

Licht, welches von den jeweiligen Faser-Bragg-Gittern 41 wieder zurück reflektiert und an den Gitterstrukturen 13 ausgekoppelt wird, wird auf paarweise angeordnete Detektoren 20 abgestrahlt.

Man sieht in der Figur 7 das Mehrkanalsensorsystem, welches eine Lichtquelle 11 und jeweils mindestens ein Faser-Bragg-Gitter 41 und eine Gitterstruktur 13 sowie ein Fotodiodenpaar als Detektoren 20 mit Filtern 30 und eine Streulichtfalle 42 für jeden Kern 10a des Lichtwellenleiters 10 aufweist.

Über die jeweiligen Intensitätsverhältnisse der Detektoren 20 bzw. Fotodiodenpaare und wellenlängenselektiven Filter 30 davor, können Änderungen der Wellenlängen der Faser-Bragg-Gitter 41 je Glasfaserkern 10a gemessen werden.

In der Figur 7 zeigen die Detektoren 21 und 22 mit ihren Messwerten bzw. dem Verhältnis ihrer Messwerte die Änderung der Wellenlänge durch das Faser-Bragg-Gitter 41^{III}. Die Detektoren 23 und 24 zeigen mit dem Verhältnis der gemessenen Intensität die Änderung der Wellenlänge durch das Faser-Bragg-Gitter 41". Die Detektoren 25 und 26 zeigen mit ihrer Messung im Verhältnis der Intensitäten die Änderung der Lichtwellenlänge durch das Faser-Bragg-Gitter 41^{I}.

### Bezugszeichenliste

- 10: Lichtwellenleiter
- 10a: Faserkern
- 10b: Mantel des Lichtwellenleiters 10
- 11: Lichtquelle
- 12: Lichtfortpflanzungsachse
- 13: Gitterstruktur
- 14: ellipsoidische Strukturelemente

- 20: Gruppe der Detektoren
- 21: Detektor
- 22: Detektor
- 23: Detektor
- 24: Detektor
- 25: Detektor
- 26: Detektor

- 30: Gruppe der Filter
- 31: Filter
- 32: Filter
- 37: Platzhalter

- 41: Faser-Bragg-Gitter
- 41^{I}: Faser-Bragg-Gitter
- 41^{II}: Faser-Bragg-Gitter
- 41^{III}: Faser-Bragg-Gitter
- 42: Streulichtfalle

## Patentansprüche

1. Vorrichtung für optische Anwendungen,
**mit** einem Lichtwellenleiter (10), an dem eine Lichtquelle (11) anschließbar ist, wobei der Lichtwellenleiter (10) so aufgebaut ist,
dass von der anschließbaren Lichtquelle (11) abgegebenes Licht sich längs einer Lichtfortpflanzungsachse (12) ausbreitet,
**mit** einer wellenlängensensitiven Gitterstruktur (13) im Lichtwellenleiter (10), **mit** Detektoren (20), die so angeordnet sind,
dass sie Teilmengen des von der wellenlängensensitiven Gitterstruktur (13) gestreuten Lichts der Lichtquelle (11) aufnehmen,
wobei die Gitterstruktur (13) im Lichtwellenleiter (10) aus periodisch angeordneten ellipsoiden Strukturelementen (14) aufgebaut ist,
**wobei** die ellipsoiden Strukturelemente (14) einen anderen Brechungsindex als das sie umgebende Material des Lichtwellenleiters (10) besitzen,
**wobei** die ellipsoiden Strukturelemente (14) eine Längsachse und eine kurze Achse aufweisen, die im Wesentlichen senkrecht zur Lichtfortpflanzungsachse (12) stehen,
so dass abhängig von der Wellenlänge Teilmengen des von der Gitterstruktur (13) gestreuten Lichts aus dem Lichtwellenleiter (10) ausgekoppelt werden und auf die Detektoren (20) fallen,
wobei zwischen mindestens einem der Detektoren (20) und dem Lichtwellenleiter (10) ein absorbierender oder teilreflektierender Filter (30) angeordnet ist,
wobei die Detektoren (20) Messelemente für die Intensität der auf den jeweiligen Detektor (20) auftreffenden Teilmenge des Lichts aufweisen,
wobei ein Auswertungselement vorgesehen ist, das aus dem Intensitätsverhältnis der mehreren Detektoren (20) eine Wellenlänge bestimmt, und
wobei die Detektoren (20) so angeordnet sind, **dass** sie
a) einander gegenüber auf verschiedenen Seiten der langen Achsen der ellipsoiden Strukturelemente (14) in der Gitterstruktur (13) angeordnet sind, oder
b) auf nur einer Seite der langen Achse der ellipsoiden Strukturelemente (14) der Gitterstruktur (13) angeordnet sind,
**wobei** sie jeweils so positioniert sind,
**dass** sie eine unterschiedliche gestreute Beugungsordnung der betrachteten Wellenlänge erfassen, oder
c) zwei Gruppen von Detektoren (20) vorgesehen sind, von denen eine Gruppe aus mindestens zwei Detektoren (20) besteht, die einander gegenüber auf verschiedenen Seiten der langen Achsen der ellipsoiden Strukturelemente (14) in der Gitterstruktur (13) angeordnet sind, und die andere Gruppe von Detektoren (20) aus mindestens zwei Detektoren (20) besteht, die auf nur einer Seite der langen Achse der ellipsoiden Strukturelemente (14) der Gitterstruktur (13) angeordnet sind, wobei sie jeweils so positioniert sind, dass sie eine unterschiedliche gestreute Beugungsordnung der betrachteten Wellenlänge erfassen.

2. Vorrichtung für optische Anwendungen nach Anspruch 1,
**dadurch gekennzeichnet,**
**dass** mehr als zwei Detektoren (20) vorgesehen und so angeordnet sind, **dass** durch die Gitterstruktur (13) gestreutes Licht verschiedener Ordnungen auf die Detektoren (20) mit ihren mindestens einem Filter (30) fällt.

3. Vorrichtung für optische Anwendungen nach Anspruch 1,
**dadurch gekennzeichnet,**
**dass** mehr als zwei Detektoren (20) vorgesehen und so angeordnet sind, dass durch die Gitterstruktur (13) gestreutes Licht verschiedener Wellenlängenbereiche auf die Detektoren (20) mit ihren mindestens einem Filter (30) fällt.

4. Vorrichtung für optische Anwendungen nach Anspruch 2 oder Anspruch 3,
**dadurch gekennzeichnet,**
**dass** unterschiedliche Filter (30) vorgesehen werden, um aus den daraus folgenden Messwerten der Detektoren (20) mehrere Wellenlängen auswerten zu können.

5. Vorrichtung für optische Anwendungen nach einem der Ansprüche 2 bis 4,
**dadurch gekennzeichnet,**
**dass** einige der Filter (30) Polarisationsfilter (32, 33, 34) sind, so **dass** eine Messung der Änderung der Polarisation des Lichtes im Lichtwellenleiter (10) erfolgt.

6. Vorrichtung für optische Anwendungen nach einem der vorstehenden Ansprüche,
**dadurch gekennzeichnet,**
**dass** der Abstand der einzelnen ellipsoiden Strukturelemente (14) innerhalb der Gitterstruktur (13) größer ist als 120 % der betrachteten Wellenlänge, bezogen auf den Brechungsindex im Lichtwellenleiter (10).

7. Vorrichtung für optische Anwendungen nach einem der vorstehenden Ansprüche,
**dadurch gekennzeichnet,**
**dass**
entlang des Lichtwellenleiters (10) mindestens ein Faser-Bragg-Gitter (41) eingebracht ist.

8. Vorrichtung für optische Anwendungen nach einem der vorstehenden Ansprüche,
**dadurch gekennzeichnet,**
**dass**
der Lichtwellenleiter (10) eine Singlemode-, Multimode-, DoubleClad- oder Multicore-Glasfaser ist.

9. Vorrichtung für optische Anwendungen nach einem der vorstehenden Ansprüche,
**dadurch gekennzeichnet,**
**dass**
die Lichtquelle (11) eine LED, SLED, Mikro-LED, Laser oder durchstimmbarer Laser ist.

## Claims

1. A device for optical applications,
**having** an optical waveguide (10), to which a light source (11) can be connected,
wherein the optical waveguide (10) is designed in such a way,
that light emitted by the connectable light source (11) propagates along a light propagation axis (12),
**having** a wavelength-sensitive grating structure (13) in the optical waveguide (10),
**having** detectors (20) that are arranged in such a way that they absorb partial amounts of the light of the light source (11) that is scattered by the wavelength-sensitive grating structure (13),
**wherein** the grating structure (13) in the optical waveguide (10) is constructed from periodically arranged ellipsoid structural elements (14),
**wherein** the ellipsoid structural elements (14) have an index of refraction that is different from that of the surrounding material of the optical waveguide (10),
**wherein** the ellipsoid structural elements (14) have a longitudinal axis and a short axis that are substantially perpendicular to the light propagation axis (12), so that, depending on the wavelength, partial amounts of the light from the optical waveguide (10) that is scattered by the grating structure (13) will be coupled out and impinges on the detectors (20),
**wherein** an absorbing or partially reflecting filter (30) is arranged between at least one of the detectors (20) and the optical waveguide (10),
**wherein** the detectors (20) have measuring elements for the intensity of the partial amount of light that impinges on the detector (20) in question,
**wherein** an evaluation element is provided, which determines a wavelength from the intensity ratio of the plurality of detectors (20), and
**wherein** the detectors (20) are arranged in such a way **that** they
a) are arranged opposite one another on different sides of the long axes of the ellipsoid structural elements (14) in the grating structure (13), or
b) are arranged on only one side of the long axes of the ellipsoid structural elements (14) of the grating structure (13),
**wherein** they are positioned in each case
**so that** they capture a different scattered diffraction order of the examined wavelength, or
c) two groups of detectors (20) are provided, of which one group is composed of at least two detectors (20), which are arranged opposite each another on different sides of the long axes of the ellipsoid structural elements (14) in the grating structure (13), and the other group of detectors (20) is composed of at least two detectors (20), which are arranged on only one side of the long axes of the ellipsoid structural elements (14) of the grating structure (13), wherein they are each positioned in such a way that they capture a different scattered diffraction order of the examined wavelength.

2. The device for optical applications according to claim 1,
**further characterized,**
**in that** more than two detectors (20) are provided and are arranged in such a way
**that** light of different orders that is scattered by the grating structure (13) impinges on the detectors (20) with their at least one filter (30).

3. The device for optical applications according to claim 1,
**further characterized,**
**in that** more than two detectors (20) are provided and are arranged in such a way that light of different wavelength ranges that is scattered by the grating structure (13) impinges on the detectors (20) with their at least one filter (30).

4. The device for optical applications according to claim 2 or claim 3,
**further characterized,**
**in that** different filters (30) are provided in order to be able to evaluate a plurality of wavelengths from the measured values of the detectors (20) that result therefrom.

5. The device for optical applications according to any of claims 2 to 4,
**further characterized,**
**in that** some of the filters (30) are polarization filters (32, 33, 34), so **that** a measurement of the change in polarization of the light in the optical waveguide (10) is produced.

6. The device for optical applications according to any of the preceding claims,
**further characterized,**
**in that** the spacing of the individual ellipsoid structural elements (14) inside of the grating structure (13) is larger than 120 % of the examined wavelength, in relation to the index of refraction in the optical waveguide (10).

7. The device for optical applications according to any of the preceding claims,
**further characterized,**
**in that**
at least one fiber Bragg grating (41) is placed along the optical waveguide (10).

8. The device for optical applications according to any of the preceding claims,
**further characterized,**
**in that**
the optical waveguide (10) is a single-mode, multimode, double-clad, or multicore glass fiber.

9. The device for optical applications according to any of the preceding claims,
**further characterized,**
**in that**
the light source (11) is a LED, SLED, micro LED, laser, or tunable laser.

## Revendications

1. Dispositif pour applications optiques,
comprenant un guide d'ondes optique (10) auquel une source de lumière (11) peut être reliée,
le guide d'ondes optique (10) étant conçu de telle sorte que la lumière émise par la source de lumière (11) pouvant y être reliée se propage le long d'un axe de propagation de la lumière (12),
comprenant une structure de réseau (13) sensible aux longueurs d'onde dans le guide d'ondes optique (10),
comprenant des détecteurs (20) disposés de telle sorte qu'ils absorbent des quantités partielles de la lumière provenant de la source de lumière (11) et diffusée par la structure de réseau (13) sensible aux longueurs d'onde,
la structure de réseau (13) dans le guide d'ondes optique (10) étant constituée d'éléments structuraux ellipsoïdaux (14) agencés périodiquement,
les éléments structuraux ellipsoïdaux (14) présentant un indice de réfraction différent de celui du matériau du guide d'ondes optique (10) qui les entoure,
les éléments structuraux ellipsoïdaux (14) présentant un axe longitudinal et un axe court qui sont sensiblement perpendiculaires à l'axe de propagation de la lumière (12),
de telle sorte qu'en fonction de la longueur d'onde, des quantités partielles de la lumière diffusée par la structure de réseau (13) sont couplées en sortie du guide d'ondes optique (10) et sont incidentes sur les détecteurs (20),
un filtre absorbant ou partiellement réfléchissant (30) étant disposé entre au moins l'un des détecteurs (20) et le guide d'ondes optique (10),
les détecteurs (20) comportant des éléments de mesure de l'intensité de la quantité partielle de lumière incidente sur le détecteur (20) respectif,
un élément d'évaluation étant prévu, lequel détermine une longueur d'onde à partir du rapport d'intensité des multiples détecteurs (20), et
les détecteurs (20) étant disposés de telle sorte
a) qu'ils soient disposés les uns en face des autres sur des côtés différents des axes longs des éléments structuraux ellipsoïdaux (14) dans la structure de réseau (13) ou
b) qu'ils soient disposés d'un seul côté du grand axe des éléments structuraux ellipsoïdaux (14) de la structure de réseau (13),
ceux-ci étant respectivement positionnés de telle sorte
qu'ils détectent un ordre de diffraction diffusé différent de la longueur d'onde observée, ou
c) il est prévu deux groupes de détecteurs (20), dont un groupe est constitué d'au moins deux détecteurs (20) disposés en face l'un de l'autre sur des côtés différents des grands axes des éléments structuraux ellipsoïdaux (14) dans la structure de réseau (13), et l'autre groupe de détecteurs (20) est constitué d'au moins deux détecteurs (20) disposés d'un seul côté des axes longs des éléments structuraux ellipsoïdaux (14) de la structure de réseau (13), ceux-ci étant respectivement positionnés de telle sorte qu'ils détectent un ordre de diffraction diffusé différent de la longueur d'onde observée.

2. Dispositif pour applications optiques selon la revendication 1,
**caractérisé en ce qu'**il est prévu plus de deux détecteurs (20) et **en ce qu'**ils sont disposés de telle sorte
que la lumière diffusée par la structure de réseau (13) et d'ordres différents soit incidente sur les détecteurs (20) au moyen de leur au moins un filtre (30).

3. Dispositif pour applications optiques selon la revendication 1,
**caractérisé en ce qu'**il est prévu plus de deux détecteurs (20) et **en ce que** ceux-ci sont agencés de telle sorte que la lumière diffusée par la structure de réseau (13) et de longueurs d'onde différentes soit incidente sur les détecteurs (20) au moyen de leur au moins un filtre (30).

4. Dispositif pour applications optiques selon la revendication 2 ou la revendication 3,
**caractérisé en ce qu'**il est prévu des filtres (30) différents afin de pouvoir évaluer plusieurs longueurs d'onde à partir des valeurs de mesure qui en résultent provenant des détecteurs (20).

5. Dispositif pour applications optiques selon l'une quelconque des revendications 2 à 4,
**caractérisé en ce que** certains des filtres (30) sont des filtres de polarisation (32, 33, 34) de telle sorte qu'une mesure de la modification de la polarisation de la lumière dans le guide d'ondes optique (10) est effectuée.

6. Dispositif pour applications optiques selon l'une quelconque des revendications précédentes,
**caractérisé en ce que** la distance des différents éléments structuraux ellipsoïdaux (14) à l'intérieur de la structure de réseau (13) est supérieure à 120 % de la longueur d'onde observée, par rapport à l'indice de réfraction dans le guide d'ondes optique (10).

7. Dispositif pour applications optiques selon l'une quelconque des revendications précédentes,
**caractérisé en ce qu'**au moins un réseau de Bragg à fibre (41) est inséré le long du guide d'ondes optique (10).

8. Dispositif pour applications optiques selon l'une quelconque des revendications précédentes,
**caractérisé en ce que** le guide d'ondes optiques (10) est une fibre optique monomode, multimode, DoubleClad ou multicoeur.

9. Dispositif pour applications optiques selon l'une quelconque des revendications précédentes,
**caractérisé en ce que** la source de lumière (11) est une LED, une SLED, une micro-LED, un laser ou un laser accordable.
